# DEMANDE DE BREVET EUROPEEN

(11) **EP 1 335 122 A1**
(43) Date de publication de la demande: **13.08.2003**
(21) Numéro de dépôt: 03290309.8
(22) Date de dépôt: 07.02.2003
(51) Int. Cl.: F02F 1/42, F02F 1/24, F02F 1/40

(54) **Culasse pour moteur à combustion interne**

(30) Priorité: 12.02.2002 FR 0201669
(71) Demandeur: Renault s.a.s., 92100 Boulogne Billancourt (FR)
(72) Inventeur: Frigo, Marc, 91310 Linas (FR); Mallet, Philippe, 78810 Feucherolles (FR)

(57) **Abrégé**

Cette culasse pour moteur à combustion interne de véhicule automobile refroidie par liquide, comprend un logement (36) destiné à recevoir un injecteur de carburant, s'étendant sensiblement le long de l'axe général du moteur et débouchant dans une chambre de combustion, des conduits d'admission (40) et des conduits d'échappement (42) débouchant chacun dans la chambre de combustion et équipés respectivement de soupapes (S') d'admission et d'échappement, les conduits d'admission et les conduits d'échappement délimitant extérieurement, conjointement avec la paroi du logement, des canaux (48, 50) de refroidissement de la culasse dans lesquels circule le liquide de refroidissement.

L'un au moins des conduits d'échappement (42) est décalé de manière radialement externe, en considérant l'axe général du moteur, par rapport aux autres conduits de la culasse.

## Description

La présente invention concerne une culasse pour moteur à combustion interne de véhicule automobile refroidie par liquide.

Une culasse conventionnelle, en particulier dans le cas d'un moteur à soupapes en tête, est pourvue d'un logement s'étendant généralement selon l'axe du moteur et destiné à recevoir un injecteur de carburant, et est équipée de conduits d'admission et de conduits d'échappement, lesquels délimitent intérieurement des sièges pour des soupapes d'admission et d'échappement correspondantes.

Classiquement, dans les moteurs à combustion interne, les soupapes d'échappement sont de mêmes diamètres et s'étendent généralement de manière symétrique par rapport à un plan médian passant par l'injecteur.

Par ailleurs, les conduits d'admission et d'échappement délimitent, conjointement avec la paroi du logement recevant l'injecteur, des canaux de refroidissement dans lesquels circule un liquide de refroidissement approprié.

En raison de leur construction, les culasses de ce type ne permettent pas un refroidissement optimum, en particulier dans la zone centrale située entre l'injecteur et les conduits d'échappement.

Le but que se propose d'atteindre l'invention est de pallier cet inconvénient.

Ainsi, selon l'invention, il est proposé une culasse pour moteur à combustion interne de véhicule automobile refroidie par liquide, comprenant un logement destiné à recevoir un injecteur de carburant, s'étendant sensiblement le long de l'axe général du moteur et débouchant dans une chambre de combustion, des conduits d'admission et des conduits d'échappement débouchant chacun dans la chambre de combustion et équipés respectivement de soupapes d'admission et d'échappement, les conduits d'admission et les conduits d'échappement délimitant extérieurement, conjointement avec la paroi du logement, des canaux de refroidissement de la culasse dans lesquels circule le liquide de refroidissement.

Selon un aspect de cette culasse, l'un au moins des conduits d'échappement est décalé de manière radialement externe, en considérant l'axe général du moteur, par rapport aux autres conduits de la culasse.

En raison de ce décalage, il est possible de prévoir suffisamment d'épaisseur dans la masse de la culasse pour dimensionner les canaux de refroidissement du ou des conduits d'échappement considérés de manière appropriée, ce qui permet d'améliorer la circulation du liquide de refroidissement. On constate également que cet agencement permet d'améliorer les caractéristiques aérodynamiques du conduit d'échappement.

Selon un mode de réalisation de cette culasse, le fond du canal de refroidissement délimité par le conduit d'échappement qui s'étend de manière décalée est situé à un niveau inférieur à celui des canaux de refroidissement délimités par les conduits d'admission.

Selon un autre mode de réalisation particulier, la distance entre l'axe général de la soupape d'échappement dudit au moins un conduit d'échappement et un plan médian passant par l'injecteur et s'étendant entre les conduits d'admission, d'une part, et les conduits d'échappement, d'autre part, est différente de la distance entre l'axe général de la soupape d'échappement du ou des autres conduits d'échappement et ledit plan médian.

Par exemple, la distance entre l'axe général de la soupape d'échappement dudit au moins un conduit d'échappement et ledit plan médian est inférieure à la distance entre l'axe général de la soupape d'échappement du ou des autres conduits d'échappement et ledit plan médian.

Selon une autre caractéristique de la culasse selon l'invention, les conduits d'échappement ayant des longueurs différentes, le conduit d'échappement le plus court s'étendant de manière décalée par rapport aux autres conduits.

Avantageusement, ce conduit le plus court a un diamètre inférieur à celui des autres conduits.

De préférence, la distance entre l'axe général de la soupape d'échappement du conduit d'échappement le plus court et un deuxième plan médian passant par l'injecteur et s'étendant entre les conduits d'échappement et entre les conduits d'admission est différente de la distance entre l'axe général de la soupape d'échappement d'un autre conduit d'échappement et ledit deuxième plan médian.

Selon un exemple de réalisation particulier, on réalise la culasse de sorte que la distance entre l'axe général de la soupape d'échappement du conduit d'échappement le plus court et le deuxième plan médian est supérieure à la distance entre l'axe général de la soupape d'échappement de l'autre conduit d'échappement et ledit deuxième plan médian.

D'autres buts, caractéristiques et avantages de l'invention ressortiront de la description suivante, donnée uniquement à titre d'exemple non limitatif, et faite en référence aux dessins annexés, sur lesquels :
- la figure 1 est une vue en coupe sagittale d'une culasse de moteur à combustion interne de véhicule automobile selon l'état de la technique ;
- la figure 2 est une vue en coupe selon la ligne II-II de la culasse de la figure 1 ;
- la figure 3 est une vue en coupe sagittale d'une culasse de moteur à combustion interne de véhicule automobile conforme à l'invention ; et
- la figure 4 est une vue en coupe selon la ligne IV-IV de la figure 3.

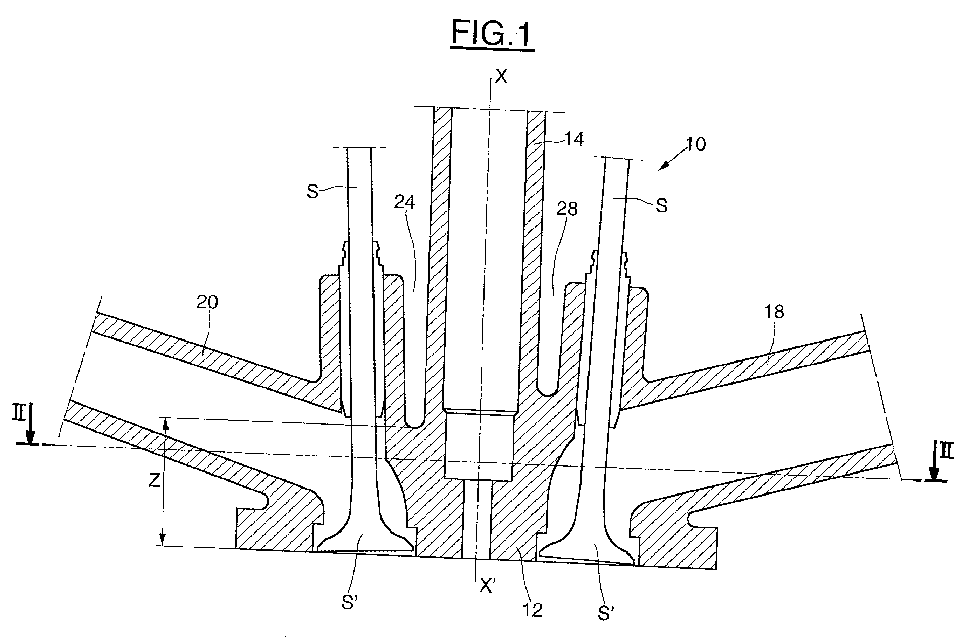

En référence à la figure 1, une culasse 10 de moteur à combustion interne de véhicule automobile comporte essentiellement un corps 12 muni d'un axe X-X' correspondant à l'axe général du moteur.

Le corps 12 est pourvu d'un logement 14 généralement cylindrique destiné à recevoir un injecteur de carburant, ainsi que des conduits 16, 18 d'admission d'air et de conduits 20, 22 d'échappement pour évacuer les gaz issus de la combustion du moteur.

Le logement d'injecteur s'étend selon l'axe général du moteur.

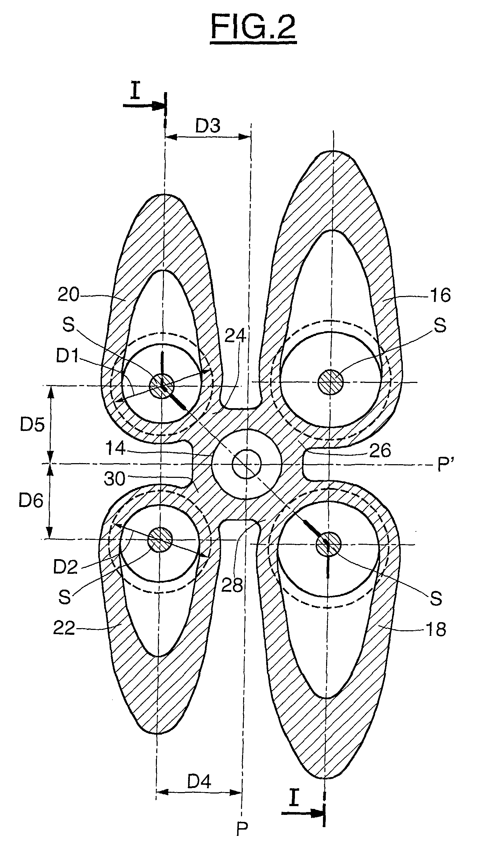

En se référant également à la figure 2, la culasse 10 présente un plan P' de symétrie, passant par l'axe X-X' du moteur et s'étendant entre les conduits d'admission 16 et 18 et entre les conduits d'échappement 20 et 22.

Les conduits d'admission et d'échappement sont chacun pourvus d'une soupape S déplaçable dans un siège ménagé dans les conduits 16, 18, 20 et 22.

Comme on le voit sur la figure 1, pour procéder au refroidissement de la culasse, cette dernière est pourvue d'un ensemble de canaux 24, 26, 28 et 30 s'étendant entre le logement d'injecteur et les conduits d'admission et d'échappement 16, 18, 20 , 22 et dans lesquels circule un liquide de refroidissement.

Selon la culasse visible sur la figure 2, le diamètre D1 de la soupape S montée dans l'un des conduits d'échappement 20 est égal au diamètre D2 de la soupape montée dans l'autre conduit d'échappement 22.

De même, les distances D3 et D4 mesurées respectivement entre les soupape S montées dans les conduits d'échappement 20 et 22 et un plan P médian s'étendant entre, d'une part, les conduits d'admission 16, 18 et, d'autre part, les conduits d'échappement 20, 22, sont égales.

De même, les distances D5 et D6 mesurées respectivement entre les soupapes S montées dans les conduits d'échappement 20 et 22 et le plan de symétrie P', sont égales.

Comme indiqué précédemment, cet agencement ne permet pas un refroidissement optimisé de la culasse, en particulier dans la zone centrale s'étendant entre l'injecteur et les conduits d'échappement 20, 22. On voit en effet, sur la figure 1, que l'altitude Z du fond du canal de refroidissement 24 s'étendant entre les conduits d'échappement et la paroi du logement d'injecteur 14, est relativement importante et ne permet pas une circulation optimale de liquide de refroidissement.

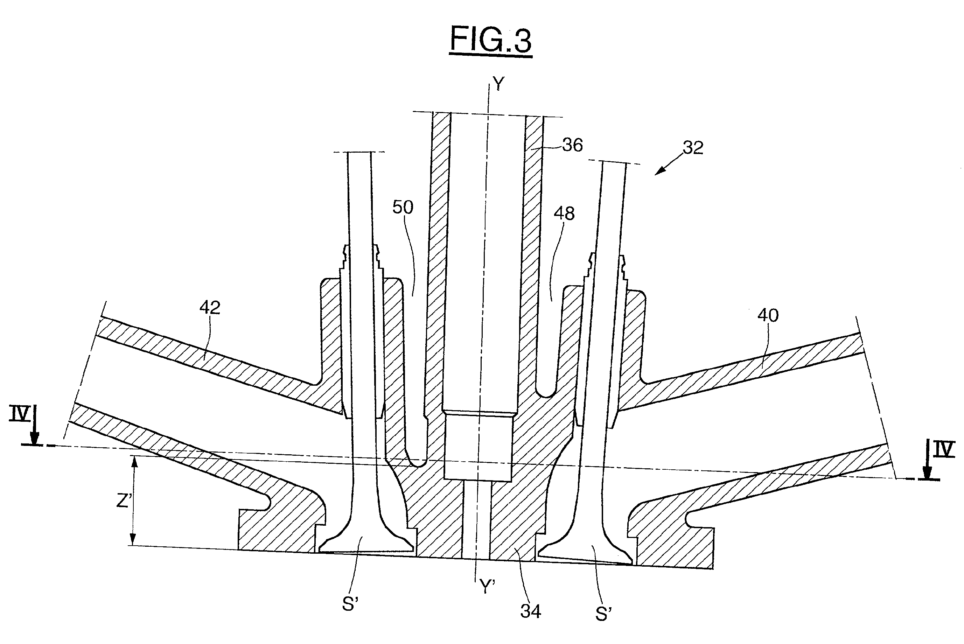

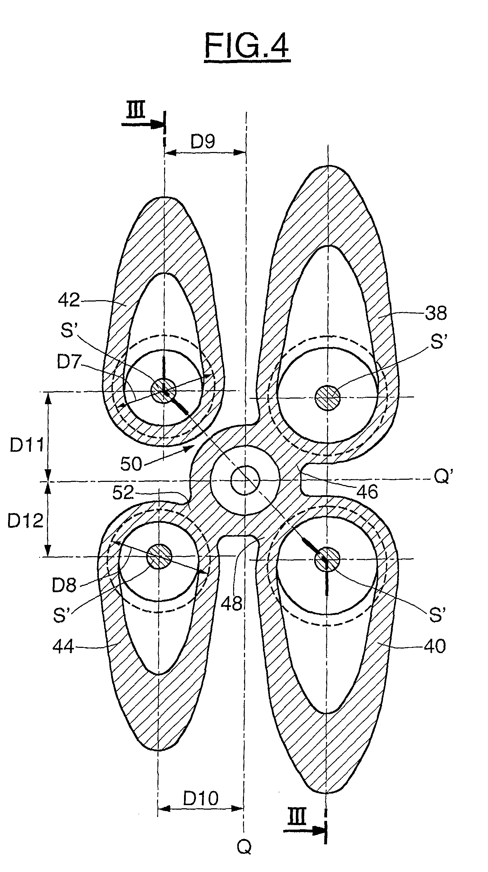

On a représenté sur les figures 3 et 4 une culasse 32 pour moteur à combustion interne de véhicule automobile conforme à l'invention, permettant de pallier cet inconvénient. Sur cette figure, la culasse a été représentée dans une position supposée verticale.

Comme dans la culasse décrite précédemment en référence aux figures 1 et 2, la culasse 32 comporte essentiellement un corps 34 muni d'un logement généralement cylindrique 36 s'étendant sensiblement le long de l'axe Y-Y' général du moteur, ainsi que des premier et deuxième conduits d'admission 38, 40 et des premier et deuxième conduits d'échappement 42, 44.

Des soupapes S' sont montées dans les conduits d'admission 38, 40 et dans les conduits d'échappement 42, 44, comme cela est classique.

Pour le refroidissement de la culasse, cette dernière est pourvue de canaux de refroidissement 46, 48, 50 et 52 s'étendant respectivement entre, d'une part, les conduits d'admission et d'échappement, et, d'autre part, la paroi du logement 36 de réception de l'injecteur.

Comme on le voit sur la figure 4, cet agencement comporte un premier plan Q médian s'étendant verticalement entre les conduits d'admission 38, 40, d'une part, et les conduits d'échappement 42, 44, d'autre part, en passant par l'axe Y-Y' général du moteur, et un deuxième plan médian Q', passant également par l'axe Y-Y' du moteur, et s'étendant entre les conduits d'admission 38, 40, et entre les conduits d'échappement 42, 44. Les deux plan médians s'étendent perpendiculairement l'un par rapport à l'autre.

Les deux soupapes d'échappement S' montées dans les conduits d'échappement 42, 44 ont des diamètres D7 et D8 différents.

Les conduits d'échappement n'ont pas la même longueur, le premier conduit d'échappement 42 étant plus court. On utilise une soupape S' de plus grand diamètre pour le deuxième conduit 44 d'échappement, le plus long. On améliore ainsi l'évacuation des gaz brûlés du cylindre.

Par ailleurs, la distance D9 entre l'axe général de la soupape S' montée dans le premier conduit d'échappement 42 et le premier plan médian Q, est inférieure à la distance D10 séparant l'axe général de la soupape montée dans le deuxième conduit d'échappement 44 et ce premier plan médian Q.

La distance D11 séparant l'axe général la soupape S' du premier conduit d'échappement 42 et le deuxième plan médian Q', est supérieure à la distance D12 séparant l'axe général de la soupape S' montée dans le deuxième conduit d'échappement 44 et ce deuxième plan médian Q'.

On notera que ces mesure sont prises au niveau du plan de coupe IV-IV de la figure 3.

Comme cela est visible sur la figure 3, cet agencement, selon lequel les conduits d'échappement et, en particulier le premier conduit d'échappement, sont décalés de manière radialement externe, en considérant l'axe général du moteur, par rapport aux autres conduits de la culasse, et l'utilisation de conduits d'échappement de diamètres différents permet de configurer les canaux de refroidissement associés aux conduits d'échappement, et en particulier au premier conduit d'échappement, de manière à optimiser les échanges thermiques et à améliorer la qualité aérodynamique des conduits d'échappement.

Cet agencement permet en effet d'abaisser l'altitude Z' du fond du canal 50 s'étendant entre le premier conduit d'échappement 42 et le logement 36 de l'injecteur et d'améliorer en conséquence la circulation d'eau dans cette zone. On notera à cet égard que les plan de coupe II-II et IV-IV des figures 1 et 3 sont situés à une même hauteur.

Comme on le conçoit, l'invention qui vient d'être décrite, qui utilise un agencement asymétrique des conduits d'échappement, permet d'abaisser le fond du canal de refroidissement de l'un au moins des conduits d'échappement, et donc une amélioration de la circulation de liquide de refroidissement en partie basse de la culasse et ainsi un meilleur refroidissement et une tenue mécanique de la culasse renforcée.

En effet, cet agencement permet d'améliorer la vitesse du fluide de refroidissement au niveau du pontet entre l'admission et l'échappement, ce qui permet d'améliorer les échanges thermiques dans cette zone et de limiter les risques d'ébullition du liquide de refroidissement.

On notera enfin que, comme indiqué précédemment, les conduits d'échappement n'ayant pas la même longueur, on améliore la vidange des gaz brûlés en sortie du cylindre en utilisant des soupapes d'échappement de tailles différentes.

## Revendications

1. Culasse pour moteur à combustion interne de véhicule automobile refroidie par liquide, comprenant un logement (36) destiné à recevoir un injecteur de carburant, s'étendant sensiblement le long de l'axe général (Y-Y') du moteur et débouchant dans une chambre de combustion, des conduits d'admission (38, 40) et des conduits d'échappement (42, 44) débouchant chacun dans la chambre de combustion et équipés respectivement de soupapes (S') d'admission et d'échappement, les conduits d'admission et les conduits d'échappement délimitant extérieurement, conjointement avec la paroi du logement, des canaux (46, 48, 50, 52) de refroidissement de la culasse dans lesquels circule le liquide de refroidissement, **caractérisé en ce que** l'un au moins des conduits d'échappement (42) est décalé de manière radialement externe, en considérant l'axe général du moteur, par rapport aux autres conduits de la culasse.

2. Culasse selon la revendication 1, **caractérisé en ce que** le fond du canal de refroidissement délimité par le conduit d'échappement (42) qui s'étend de manière décalée est situé à un niveau inférieur à celui des canaux de refroidissement délimités par les conduits d'admission.

3. Culasse selon l'une des revendications 1 et 2, **caractérisé en ce que** la distance (D9) entre l'axe général de la soupape d'échappement dudit au moins un conduit d'échappement (42) et un plan médian (Q) passant par l'injecteur et s'étendant entre les conduits d'admission, d'une part, et les conduits d'échappement, d'autre part, est différente de la distance (D10) entre l'axe général de la soupape d'échappement du ou des autres conduits d'échappement (44) et ledit plan médian.

4. Culasse selon la revendication 3, **caractérisé en ce que** la distance (D9) entre l'axe général de la soupape d'échappement dudit au moins un conduit d'échappement (42) et ledit plan médian (Q) est inférieure à la distance (D10) entre l'axe général de la soupape d'échappement du ou des autres conduits d'échappement et ledit plan médian.

5. Culasse selon l'une quelconque des revendications 1 à 4, les conduits d'échappement (42, 44) ayant des longueurs différentes, **caractérisé en ce que** le conduit d'échappement le plus court s'étend de manière décalée par rapport aux autres conduits.

6. Culasse selon la revendication 5, **caractérisé en ce que** le conduit le plus court (42) a un diamètre inférieur à celui de l'autre ou des autres conduits.

7. Culasse selon l'une des revendications 5 et 6, **caractérisé en ce que** la distance (D11) entre l'axe général de la soupape d'échappement du conduit d'échappement (42) le plus court et un deuxième plan médian (Q') passant par l'injecteur et s'étendant entre les conduits d'échappement (42, 44) et entre les conduits d'admission (38, 40) est différente de la distance (D12) entre l'axe général de la soupape d'échappement (44) d'un autre conduit d'échappement et ledit deuxième plan médian.

8. Culasse selon la revendications 7, **caractérisé en ce que** la distance (D11) entre l'axe général de la soupape d'échappement du conduit d'échappement (42) le plus court et ledit deuxième plan médian (Q') passant par l'injecteur et s'étendant entre les conduits d'échappement (42, 44) et entre les conduits d'admission (38, 40) est supérieure à la distance (D12) entre l'axe général de la soupape d'échappement de l'autre conduit d'échappement (44) et ledit deuxième plan médian.
